# EUROPEAN PATENT APPLICATION

(11) **EP 4 706 864 A1**
(43) Date of publication of application: **11.03.2026**
(21) Application number: 25200345.4
(22) Date of filing: 04.09.2025
(51) Int. Cl.: B23K 26/00, B23K 26/14, B23K 26/21

(54) **ANGLED NOZZLES FOR DIRECTIONAL CONTROL OF A LASER BEAM FOR A LASER WELDING TOOL**

(30) Priority: 06.09.2024 US 202463691889 P; 27.12.2024 US 202463739300 P; 02.09.2025 US 202519315939
(71) Applicant: Illinois Tool Works Inc., Glenview IL 60025 (US)
(72) Inventor: LIU, Shuang, Glenview, 60025 (US); ALBRECHT, Bruce P., Glenview, 60025 (US); SCHNEIDER, Joseph C., Glenview, 60025 (US); BEIL, Peter, Glenview, 60025 (US)
(74) Representative: HGF

(57) **Abstract**

An angled nozzle for a handheld laser welding torch is disclosed. The nozzle includes a contact edge at a first tip of the nozzle and extending from the nozzle a first distance; and a contact surface along a portion of a length of the nozzle, the contact surface extending from the nozzle a second distance less than the first distance.

## Description

### CROSS REFERENCE TO RELATED APPLICATIONS

This application claims priority from and the benefit of U.S. Patent Application Ser. No. 19/315,939, entitled "ANGLED NOZZLES FOR DIRECTIONAL CONTROL OF A LASER BEAM FOR A LASER WELDING TOOL," filed September 2, 2025, U.S. Provisional Patent Application Ser. No. 63/691,889, entitled "ANGLED NOZZLES FOR DIRECTIONAL CONTROL OF A LASER BEAM FOR A LASER WELDING TOOL," filed September 6, 2024, and U.S. Provisional Patent Application Ser. No. 63/739,300, entitled "ANGLED NOZZLES FOR DIRECTIONAL CONTROL OF A LASER BEAM FOR A LASER WELDING TOOL," filed December 27, 2024, both of which are hereby incorporated by reference in their entireties for all purposes.

### BACKGROUND

Welding is a process that has historically been a cost-effective joining method. Welding is, at its core, a way of bonding two pieces of parent material. Laser welding is a welding technique used to join multiple pieces of metal through the use of a laser. The laser beam provides a concentrated heat source, enabling a precise control of the heat input and high welding speed, creating a weld with low heat input, and a small heat affected zone. In various applications, filler metal may be needed for different purposes such as filling a gap between workpieces, reinforcing the joint, overlaying a substrate surface, building up an object, or acting as a buffering medium.

Conventional laser-based welding tools can create challenges for new users, especially for manually operated laser welders. Even welders with long experience with arc-related welding systems may be unfamiliar with the peculiarities of a laser welding system, including how to achieve a quality weld bead and incorporate laser protection features. Thus, systems and/or methods that facilitate welding from laser-based welding systems that allow for a range of welding angles are desirable.

### SUMMARY

This disclosure relates generally to handheld laser welding systems, methods, and apparatuses. More particularly, this disclosure relates to an angled nozzle that includes a contact edge at a first tip of the nozzle and extending from the nozzle a first distance; and a contact surface along a portion of a length of the nozzle, the contact surface extending from the nozzle a second distance less than the first distance, substantially as illustrated by and described in connection with at least one of the figures, as set forth more completely in the claims.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIG. 1 illustrates an example laser type welding system, in accordance with aspects of this disclosure.
FIG. 2 illustrates an example handheld laser welding tool employing a beam expanding optic, in accordance with aspects of this disclosure.
FIGS. 3A to 3C illustrate example handheld laser welding tools employing an angled nozzle, in accordance with aspects of this disclosure.
FIGS. 4A to 4D illustrate example laser welding systems employing an angled nozzle demonstrating a range of welding angles, in accordance with aspects of this disclosure.
FIGS. 5A to 5F illustrate various perspective views of an example angled nozzle, in accordance with aspects of this disclosure.
FIGS. 6A to 6D illustrate detailed views of an example angled nozzle, in accordance with aspects of this disclosure.
FIGS. 7A and 7B illustrate cross-sectional views of welds performed by a handheld laser welding torch at different welding angles, in accordance with aspects of this disclosure.
FIG. 8 illustrates a perspective view of another example angled nozzle, in accordance with aspects of this disclosure.
FIGS. 9A and 9B illustrate perspective views of the example laser welding system employing the angled nozzle of FIG. 8, in accordance with aspects of this disclosure.
FIGS. 10A and 10B illustrate perspective views of an example laser welding system employing another angled nozzle, in accordance with aspects of this disclosure.
FIG. 11 illustrates a perspective view of an example laser welding system employing another angled nozzle, in accordance with aspects of this disclosure.
FIGS. 12A and 12B illustrate perspective views of the example laser welding system employing the angled nozzle of FIG. 11, in accordance with aspects of this disclosure.
FIG. 13 illustrates a perspective view of an example laser welding system employing another angled nozzle, in accordance with aspects of this disclosure.

The figures are not necessarily to scale. Wherever appropriate, similar or identical reference numerals are used to refer to similar or identical components.

### DETAILED DESCRIPTION

Disclosed example systems and methods for laser welding are provided. In particular, disclosed example laser welding systems include a manually operated laser welding torch employing an angled nozzle designed to contact a workpiece (e.g., a T-joint) at a desired angle during a laser welding operation. The use of an angled nozzle allows an operator to angle the laser welding torch at an acute angle as the laser beam and/or the wire is being applied to the workpiece, which is difficult, impractical or physically impossible with conventional handheld laser welding systems.

Conventional nozzles are symmetrical, often with two opposing tines, which allow for the channeling of a laser beam and introduction of a filler wire. However, conventional nozzles and the systems that support them limit the available positions, angles, and/or orientations for welding. This can limit and/or change the depth of penetration in the welding of some joints, impacting the quality of a weld.

Advantageously, use of the disclosed angled nozzle, a range of welding angles can be achieved. By comparison, a laser welding torch without employing the disclosed angled nozzle would be substantially limited in the range of available welding angles.

As used herein, the word "exemplary" means serving as an example, instance, or illustration. The examples described herein are not limiting, but rather are exemplary only. It should be understood that the described examples are not necessarily to be construed as preferred or advantageous over other examples. Moreover, the term "examples" does not require that all examples of the disclosure include the discussed feature, advantage, or mode of operation.

As used herein, a wire-fed welding-type system refers to a system capable of performing welding (e.g., gas metal arc welding (GMAW), gas tungsten arc welding (GTAW), etc.), brazing, cladding, hardfacing, and/or other processes, in which a filler metal is provided by a wire that is fed to a location on the workpiece, such as an arc, a laser beam, or weld puddle.

As used herein, the term "welding-type operation" includes a welding operation employing a laser welding systems using laser energy, operable to fuse, bind, and/or cut one or more materials and/or layers of materials.

As used herein, a welding-type power source refers to any device capable of, when power is applied thereto, supplying welding, cladding, plasma cutting, induction heating, laser (including laser welding and laser cladding), carbon arc cutting or gouging and/or resistive preheating, including but not limited to transformer-rectifiers, inverters, converters, resonant power supplies, quasi-resonant power supplies, switch-mode power supplies, etc., as well as control circuitry and other ancillary circuitry associated therewith.

As used herein, laser beam scanning, laser beam scanning profile, laser scanning profile, or scanning profile, and/or wobble refers to one or more of control of the shape (e.g., common geometric shapes, a rectangle, a triangle, a loop, a circle, a zig-zag, V-shape, a U-shape, a figure-8, etc.), size (e.g., width and/or length), power distribution (e.g., bell curve, ramping up or down, favor one side over the other or center), scanning speed (e.g., over entire scan and/or over discrete portions of the scan), and/or pulse frequency (e.g., over entire scan and/or over discrete portions of the scan) of the laser power on the workpiece and/or the filler material, and any combination thereof.

For the purpose of promoting an understanding of the principles of the claimed technology and presenting its currently understood best mode of operation, reference will be now made to the examples illustrated in the drawings, and specific language will be used to describe the same. It will nevertheless be understood that no limitation of the scope of the claimed technology is thereby intended, with such alterations and further modifications in the illustrated device and such further applications of the principles of the claimed technology as illustrated therein being contemplated as would typically occur to one skilled in the art to which the claimed technology relates.

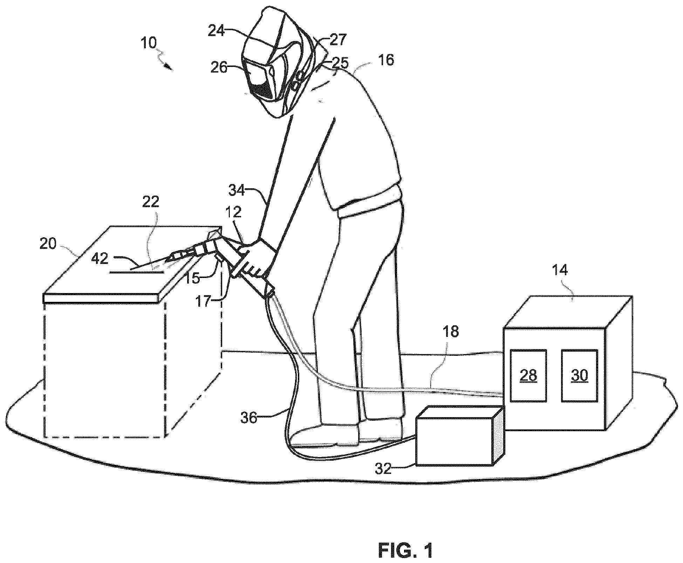

Turning to the figures, FIG. 1 provides a schematic diagram of an example laser welding system 10. The example laser welding system 10 of FIG. 1 includes a laser welding power supply 14, a laser power source 28, a laser controller 30, and a wire feeder 32. A laser welding torch 12 is connected to the power supply 14 via power cable 18, and receives wire 36 from the wire feeder 32.

The laser source 28 generates welding-type laser power 42 (e.g., directed light energy) based on input power received from the power supply 14. The laser source 28 may be a light emitting a CO2 laser, Nd:YAG laser, diode-type laser, fiber laser, disk laser or any other type of laser generator. As used herein, welding-type lasing power refers to laser power having wavelength(s) that are suitable for delivering energy to metal for welding, cutting, and/or cladding.

An operator 16 can wear one or more of a wearable 34 (such as a glove, a smartwatch, etc.) and/or a helmet 24. In some examples, the helmet 24 includes a screen 26, which may be configured to automatically dim when exposed to intense light, may be a filter for one or more wavelengths, and/or may be connected to another part of the system (e.g., controller 30). This allows the screen 26 to present information to the operator 16 to inform the welding process. In some examples, a helmet can include an auto-darkening filter (ADF). The filter may block and/or respond to specific wavelengths associated with laser welding, for instance, to darken the view screen. The filtering feature can also be applied to goggles and/or glasses.

In some examples, within the helmet, goggles, and/or glasses, a screen can be within view of the user, providing the view of a camera. This can be limited to the view from the camera, or may provide an augmented reality (AR) and/or virtual reality (VR) image. In some examples, the helmet 24 may include a sensor 27 (e.g., a heat sensor, a light sensor, an inertial measurement unit (IMU), an accelerometer, etc.) and/or a camera 25 (e.g., optical camera, infrared (IR) camera, etc.).

The torch 12 focuses the laser power 42 at a joint or weld 22 on a workpiece 20. The laser power 42 heats the workpiece 20 to generate a puddle during welding operations. The wire feeder 32 feeds the wire 36 (e.g., filler wire, cladding material, metal additive) to the puddle generated by the laser power 42. The wire 36 melts into the puddle in the weld 22. The wire 36 may be fed from a wire supply, such as a wire reel or wire supply drum, and may be conveyed through a cable or other suitable conduit.

During a welding process, the laser controller 30 controls a focal point of the laser beam to wobble in multiple axes as applied to the workpiece 20. By moving the focal point in multiple directions, the laser can induce one or more beneficial effects in the weld. Examples of such beneficial effects that can be induced in the lateral direction(s) include agitating or stirring of the puddle laterally (including in patterns) to improve filler mixing, creating a heat gradient in the puddle in at least a partially lateral direction to induce movement and improve puddle wetting, and/or controlling the heating and/or cooling rates of the puddle in at least a partially lateral direction by controlling where heat is concentrated.

In some examples, movement of the focal point of the laser beam is controlled such that side-to-side motion is variable, random, and/or has multiple changing directions, angles, and/or lengths. For instance, side-to-side movement of the focal point may promote gap filling, wetting at the toes of a workpiece, etc., and may be set to a high wobble frequency (e.g., greater than 100 wobbles/movements per second). An additional, possibly independently controlled forward-backward motion at a lower wobble frequency could be used to result in a substantially rippled appearance, similar to a traditional ripple look of tungsten inert gas (TIG) welds, and/or other desirable characteristics. As disclosed herein, wobble can be implemented on a wire as well as the laser beam to further enhance the quality and appearance of the weld bead.

In some examples, the wire feeder 32 can be fitted with one or more devices to control lateral movements of the wire 36, in addition to forward or backward movement thereof. For instance, the wire 36 may be channeled to the workpiece 20 and experience a force (e.g., from an actuator, barrier, a mechanical biasing element, etc.) which causes the wire 36 to move in a lateral pattern, circular motion, or other movement. In examples, patterned movement of the wire 36 can be controlled to sync with and/or complement the application of the laser beam 42. This can include applying a portion of the laser beam over the wire prior to the wire entering a weld bead (e.g., for preheating) and/or scanning the laser beam in a pattern, then controlling the wire to follow the pattern to enhance deposition rates and/or travel speed.

In some examples, a preheating device 15 (e.g., a resistive and/or inductive heater) is employed at or near the laser welding torch 12. Employing preheating can lower the amount of laser energy required to perform a weld, and/or increase the speed and/or amount of wire applied to a given weld. The preheating device 15 may include one or more sensors to gauge a temperature and/or enthalpy of the wire and/or workpiece. In some examples, the preheating device 15 includes and/or is operationally connected to an auxiliary switch (e.g., an arc clamp) to divert a portion of electrical current from the wire. In other words, if the laser welding system 10 senses an arc is forming between the wire 42 and a surface of the torch (e.g., nozzle, neck 61, etc.) and/or the workpiece 20 during a laser welding operation, the auxiliary switch can close a circuit to direct current away from the wire to avoid arcing between the wire and a metallic surface.

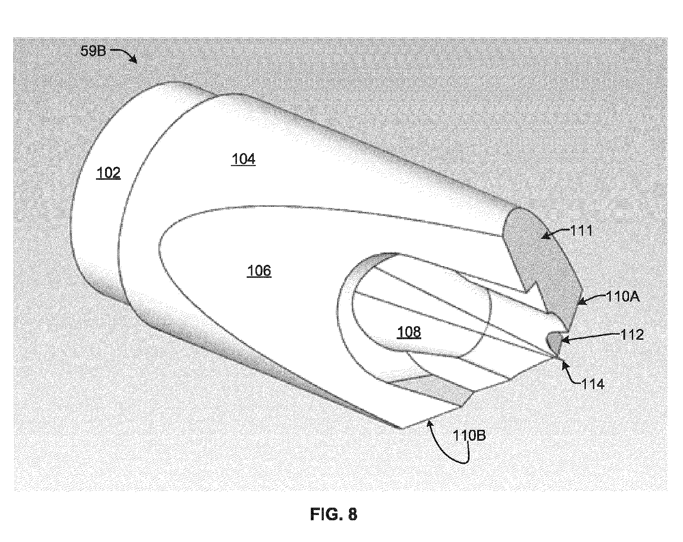

The laser beam 42 can be controlled in any desired pattern, which may include, but is not limited to, a pattern with one or more straight lines and/or one or more curves. In some embodiments, the desired pattern may include a pause or break in the pattern, such as a time interval in which the focal point does not move. The desired pattern may include a circle, an ellipse, a zigzag, a figure 8, a transverse reciprocating line, a crescent, a triangle, a square, a rectangle, a non-linear pattern, an asymmetrical pattern, a pause, or any combination thereof. As may be appreciated, a pattern or a combination of patterns may be used and optimized for particular welds and/or welding positions. The movement of the focal point and the relative movement between the workpiece 20 and the laser welding torch 12 causes the focal point to trace a superimposed pattern over the workpiece 20. The example pattern may be traced by the laser beam 42 to agitate the puddle.

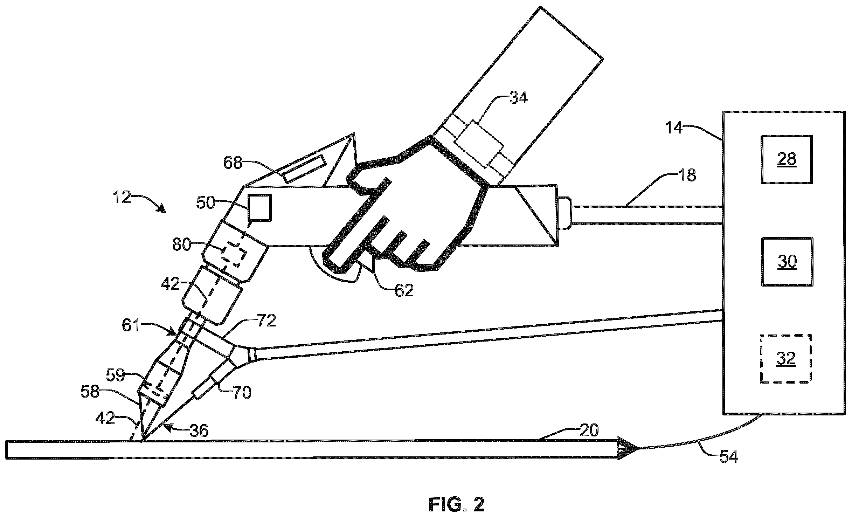

In some disclosed examples, a laser welding system may employ one or more lasers or laser beams to join multiple workpieces and/or create an object via additive manufacturing techniques. In some examples and shown in FIG. 2, a handheld laser tool 12 directs a laser beam 42 to focus on a location of the workpiece 20. This focal point may correspond to a joint to be welded, but may also result in the laser scanning in one or more patterns, such as near, over and/or about welding wire 36. In some examples, application of the laser beam is configured for cleaning a workpiece, with energy and focal spot settings selected for such an application.

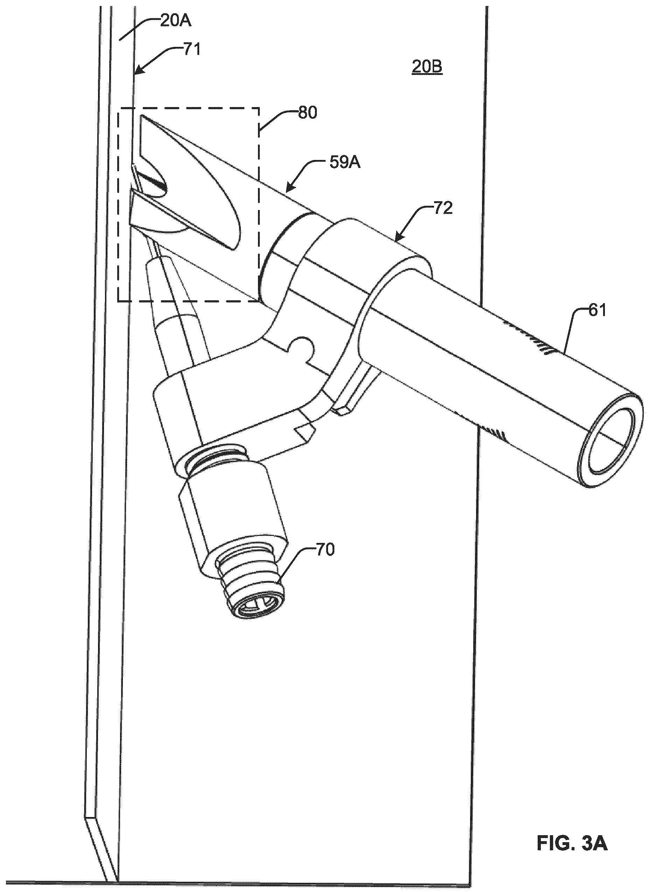

In some examples, the laser generator 28 creates the laser beam 42, which is introduced to the laser welding torch 12 via one or more fiber optics, and delivered to one or more optics 50 within the torch. The beam from the laser generator 28 can transmitted to a beam expanding optic 80 (e.g., beam spreading, beam shaping, etc.) to widen a spot size of the laser beam 42 at the workpiece 20 (as shown in detail 80 of FIG. 3A), and/or split into two or more laser beams for application to the workpiece 20 (e.g., via a filter, a mirror, a lens, a diffraction grating, a gradient index lens, etc.). In some examples, the welding wire, or filler material, 36 advances to the workpiece 20 via a tube or channel 70 from a wire feeder 32 (which may be a standalone accessory, or may be incorporated with the laser power supply 14). In some examples, the channel 10 is connected to the torch 12 by one or more mounts or brackets 72, which can support and orient the tube to deliver the wire 36 at the point of welding. Although shown being delivered via tube 70, in some examples the wire can be fed through the center of the nozzle 59 (e.g., coaxially), such that the laser beam 42 and the welding wire 36 contact the workpiece and/or the weld bead within a small radius.

In some examples shown in FIG. 2, the handheld laser tool 12 directs one or more laser beams 42 to contact the workpiece 20. The tube or channel 70 guides welding wire 36 to the workpiece 20 from one or more angles. As shown, the tube 70 can be external to the tool 12, and can be attached, mounted, and/or integrated with the tool 12. In some examples, the tube 70 can be configured such that the wire 36 contacts the workpiece 20 in a way that assists the operator with moving the torch along at a steady and consistent travel speed.

FIGS. 3A to 3C illustrate example handheld laser welding tools employing an angled nozzle, in accordance with aspects of this disclosure.

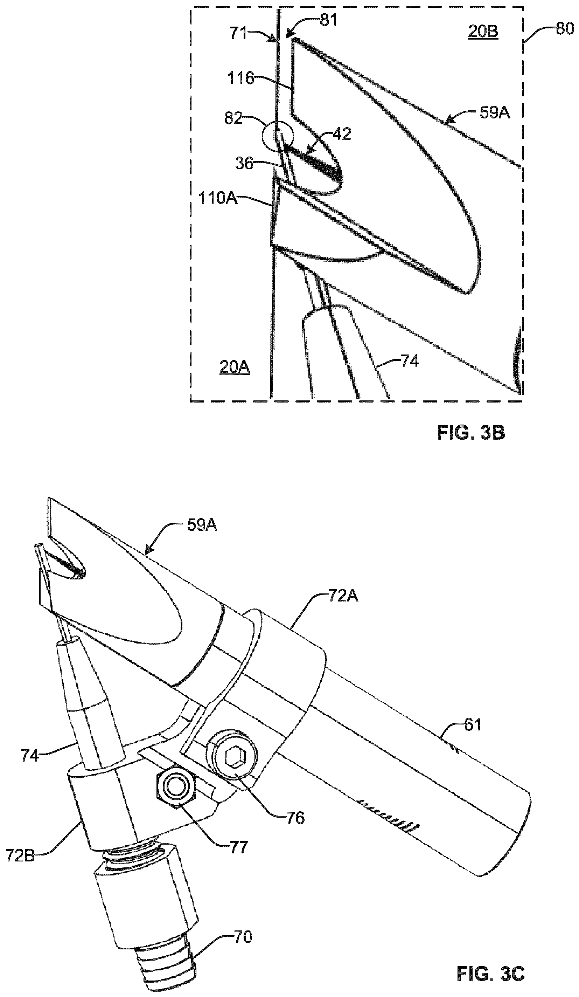

FIG. 3A shows a top view of a portion of a torch is equipped with a modified, angled nozzle 59A, such as at an end of the neck 61 of the torch. Also attached to the neck 61 is mount or bracket 72 to receive the tube 70, directing the wire 36 toward a joint 71 between two workpieces 20A and 20B arranged at a T-joint. Window 80 is shown in FIG. 3B, which provides a detail of the end of the angled nozzle 59A along the joint 71. The illustration shows a tip 74 directing the wire 36 to a welding point 82, where the laser 42 and wire 36 meet at the joint 71 to create a weld bead.

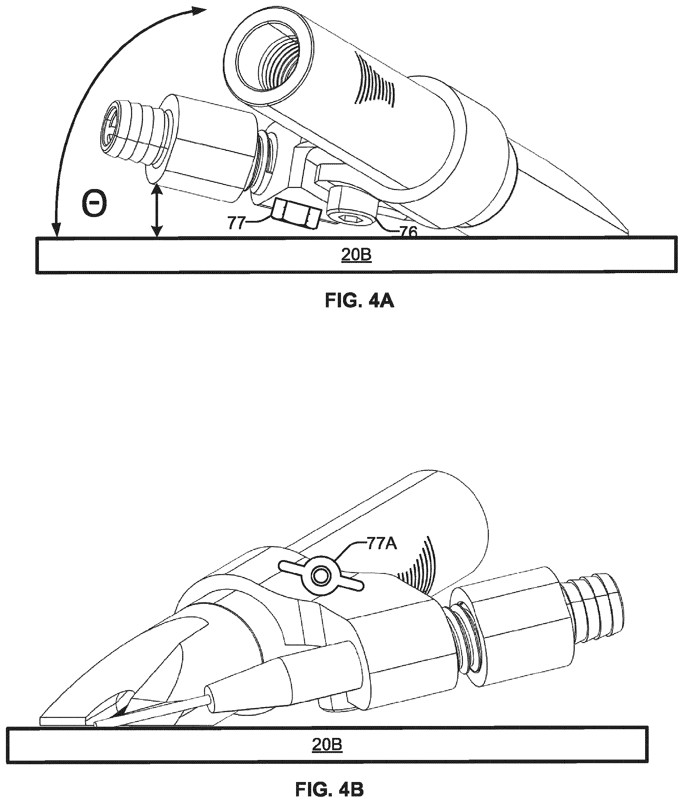

A contact edge 110A of the angled nozzle 59A contacts a surface of the workpiece 20A, and a second portion of the angled nozzle 59A contacts a surface of the workpiece 20B (see, e.g., FIGS. 4A-4D). The weld bead is laid in a gap 81 between the workpiece 20A and a secondary surface 116 of the angled nozzle 59A. Moreover, the wire 36 is channeled through a groove (e.g., groove 112, shown in FIGS. 4A-4D), allowing for the contact edge 110A and contact surface 110B are in contact with the workpieces 20A and 20B, respectively, as the torch is moved along the workpieces during a welding operation.

FIG. 3C illustrates a bottom view of the portion shown in FIG. 3A. The mount 72 is shown in a first portion 72A (e.g., brace or bracket) secured to the neck 61 and a second portion 72B secured to the nozzle 74 and/or tube 70. The first and second portions are secured together by a fastener 76. Although some examples are provided as comprising two portions, in some examples the mount 72 may be formed as a single portion, or formed as three or more portions.

in some examples, an adjustable stabilizer 77 is used to provide fine-tuned adjustment of the angle of the welding torch. In particular, the stabilizer 77 can extend to contact a surface of the workpiece 20B, thereby providing another point of contact for the torch via the mount 72. This allows for changes in the angle at which the nozzle is directed toward the workpiece(s) and/or joint.

During a welding operation, the contact edges/surfaces of the angled nozzle allow for positioning or orienting the torch and/or nozzles at one or more angles relative to surfaces of the workpieces 20A and/or 20B. As shown in FIGS. 4A and 4B, the distance between the angled nozzle and/or the stabilizer 77 can be adjusted, which can adjust the angle Θ at which the wire and/or laser approach the point of welding. In some examples, a portion of the stabilizer 77 can extend from a surface of the mount 72 facing the surface of the workpiece 20B to make contact with the workpiece. This creates a third point of contact with the workpiece to be welded, as the contact edge and contact surface of the angled nozzle 59A are configured for contact with the workpieces 20A and 20B, respectively. This provides a degree of stability for the welder, ensuring a consistent angle as the nozzle is dragged along the surface(s) of the workpiece.

In some examples, the stabilizer 77 is adjustable such that a distance that the portion extends from the mount 72 can change relative to the surface of workpiece 20B. The stabilizer 77 thus supports the mount 72 and the torch 12 to maintain a consistent angle during welding. The stabilizer 77 can be adjusted by a variety of means 77A, such as a button, knob, lever, thumb screw, bolt, cam lock, series of washers, motorized/actuator adjustment, and/or other suitable adjustable supports and/or spacers. This can be arranged at a surface of the mount 72 facing away from the weld and/or toward the operator, and often provided in a location of the system such that the knob is easily accessible, yet not likely to impede welding.

In some examples, the portion of the stabilizer 77 in contact with the workpiece 20B has a foot to stabilize the torch. Although a single stabilizer 77 is illustrated, two or more stabilizers can be employed, which may make contact with the workpiece at two or more points along the surface thereof. Further, although the stabilizer 77 is illustrated as being arranged in the middle of the mount 72 (e.g., between the torch neck 61 and the tube 70), a stabilizer may be arranged on one or more external sides (e.g., the outside of one or both of the torch neck 61 and the tube 70).

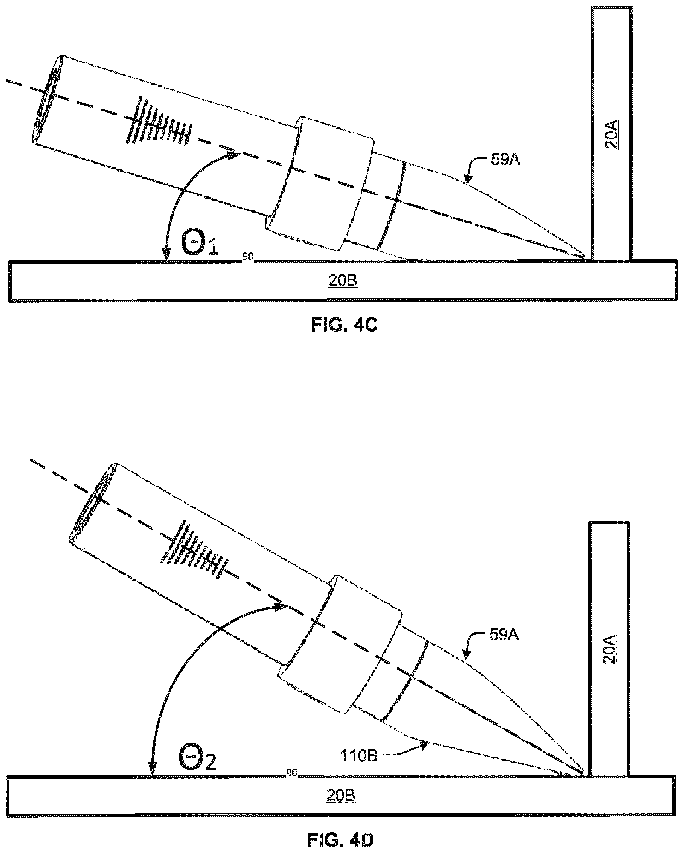

FIGS. 4C and 4D illustrate the example laser welding systems employing an angled nozzle 59A demonstrating a first angle Θ₁ and a second angle Θ₂, respectively. Although the surface 110B is in contact with workpiece 20B in FIG. 4C (e.g., at a more acute angle), during welding the angle at which the operator holds the torch may change, such that a gap is made between the nozzle and the workpiece. In such an example, a fastener or stabilizer may be employed to stabilize the torch.

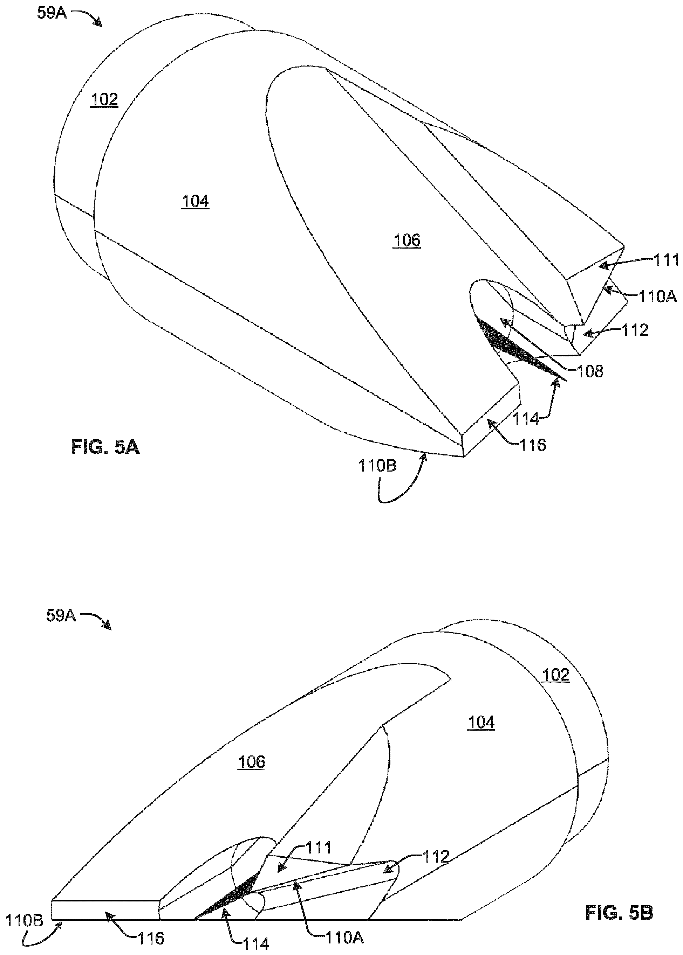

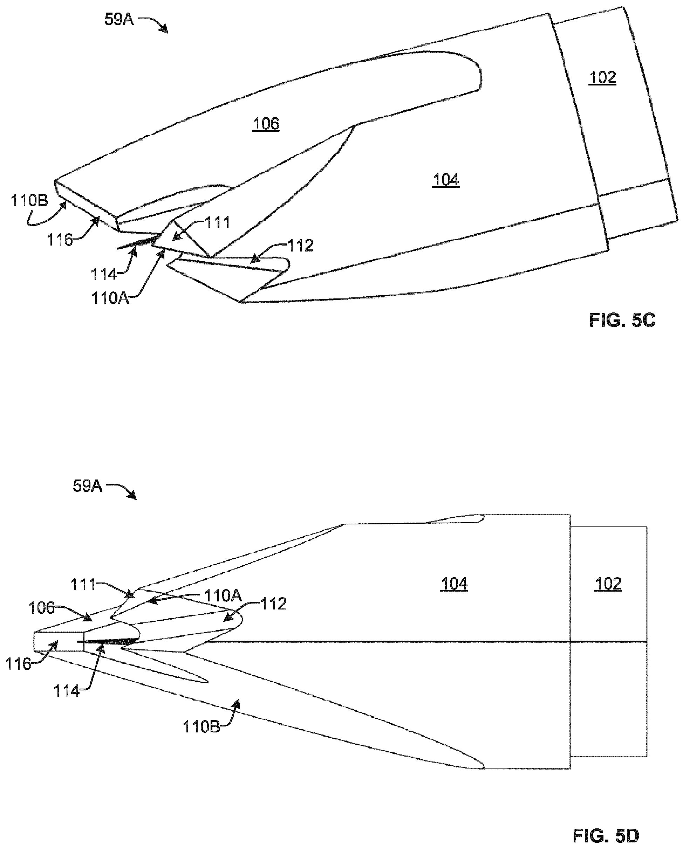

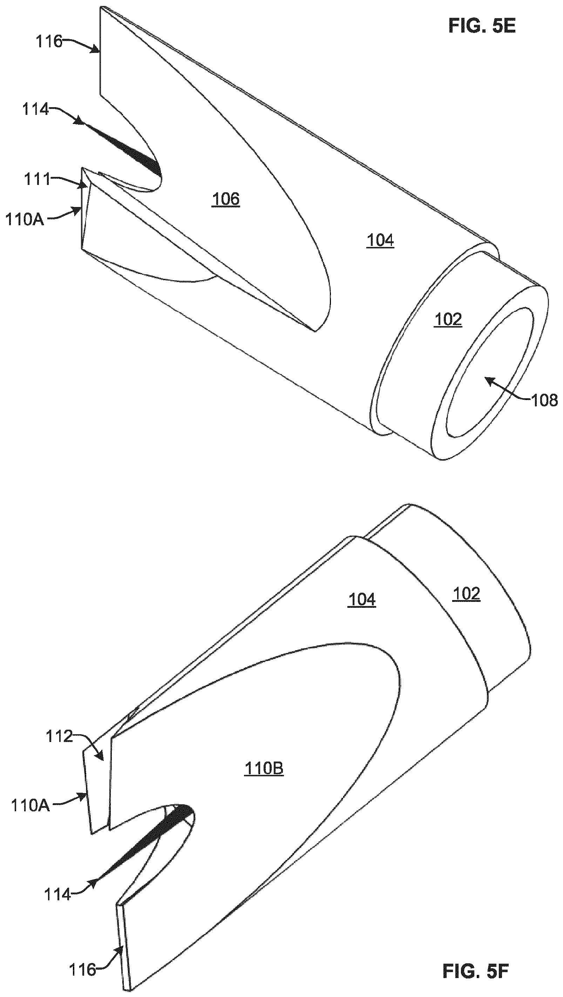

FIGS. 5A to 5F illustrate various perspective views of the example angled nozzle 59A, in accordance with aspects of this disclosure. As shown, the nozzle includes a base 102 to mate with the neck 61, a body 104 from which one or more surfaces can be machined to better support the torch during welding. The angled nozzle 59A has a sloped surface 106 that ends at the secondary surface 116. On the opposite side of a bore 108 (open to transmit the laser beam 114) is contact edge 110A configured to contact workpiece 20A and a groove or channel 112 to allow passage of the wire 36. Further, contact surface 110B is formed with an angle approximately normal to the contact edge 110A. As shown, the secondary surface 116 does not extend as far as the contact edge 110A to provide the gap 81 for the weld bead.

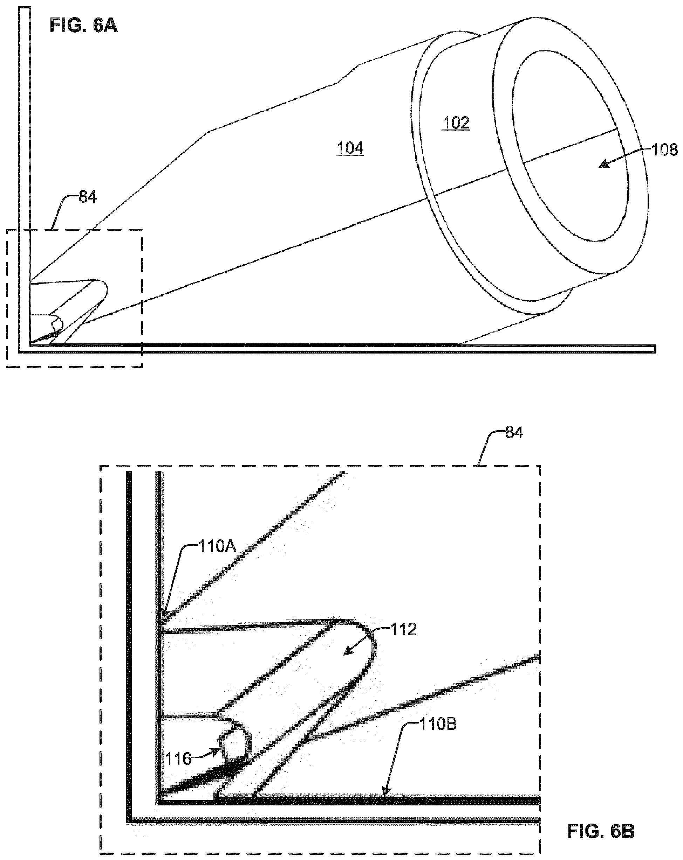

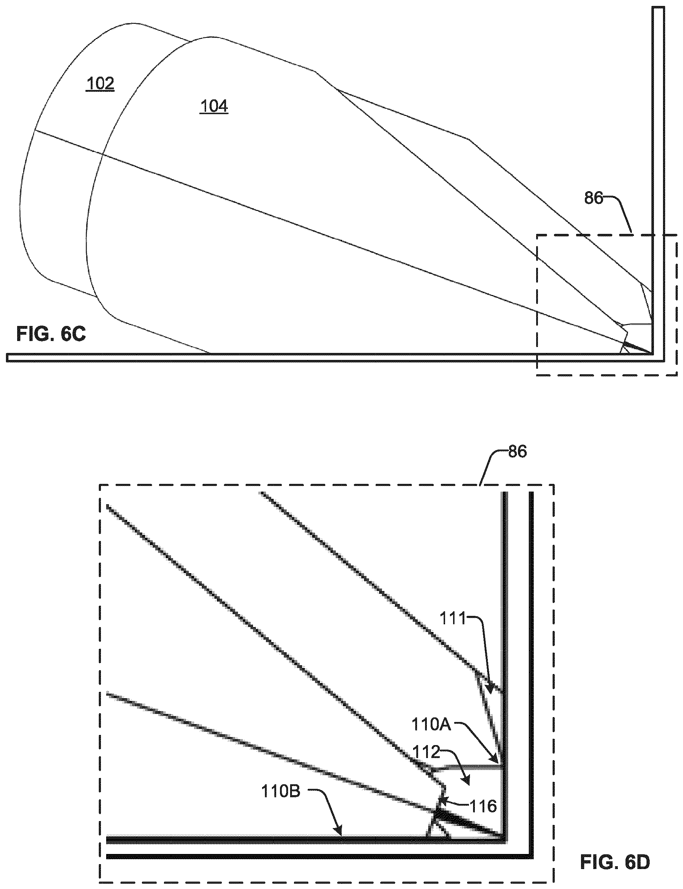

FIGS. 6A to 6D illustrate detailed views of an example angled nozzle, in accordance with aspects of this disclosure. In window 84 of FIG. 6B, the contact edge 110A and surface 110B can be seen in contact with the workpiece, while the groove 112 shows the gap created by the secondary surface 116. Window 86 of FIG. 6D shows the opposing perspective, with secondary surface 116 at the fore.

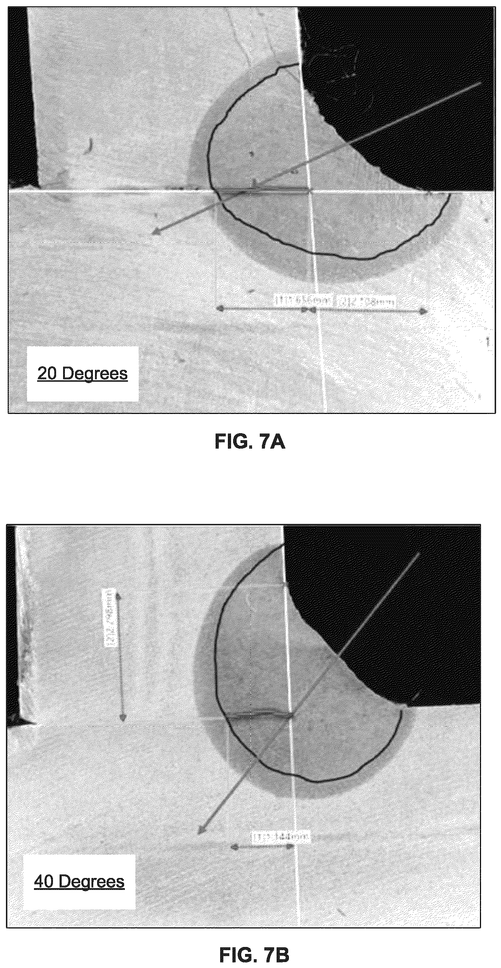

FIGS. 7A and 7B illustrate cross-sectional views of welds performed by a handheld laser welding torch at different welding angles, in accordance with aspects of this disclosure. In particular, FIG. 7A illustrates the horizontal depth of penetration in a T-joint from a welding laser applied at a 20 degree angle. This is greater than the horizontal depth of penetration from a 40 degree angle, shown in FIG. 7B.

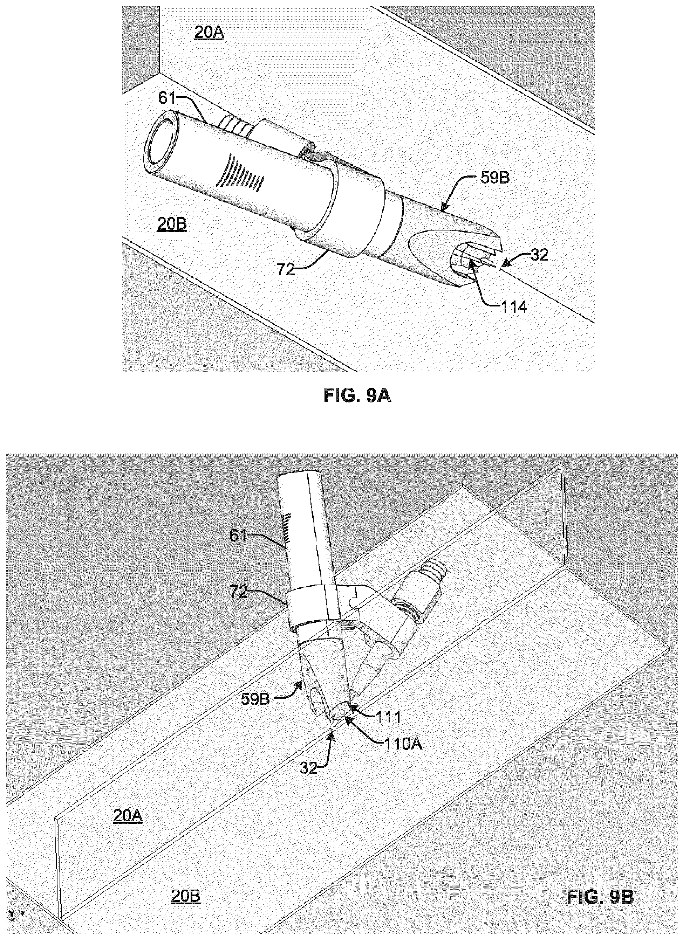

FIG. 8 illustrates a perspective view of another example angled nozzle 59B, in accordance with aspects of this disclosure. FIGS. 9A and 9B illustrate perspective views of the example laser welding system employing the angled nozzle 59B.

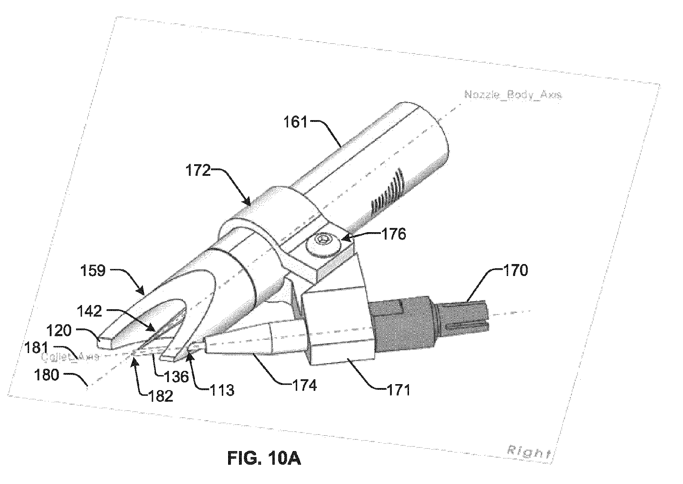

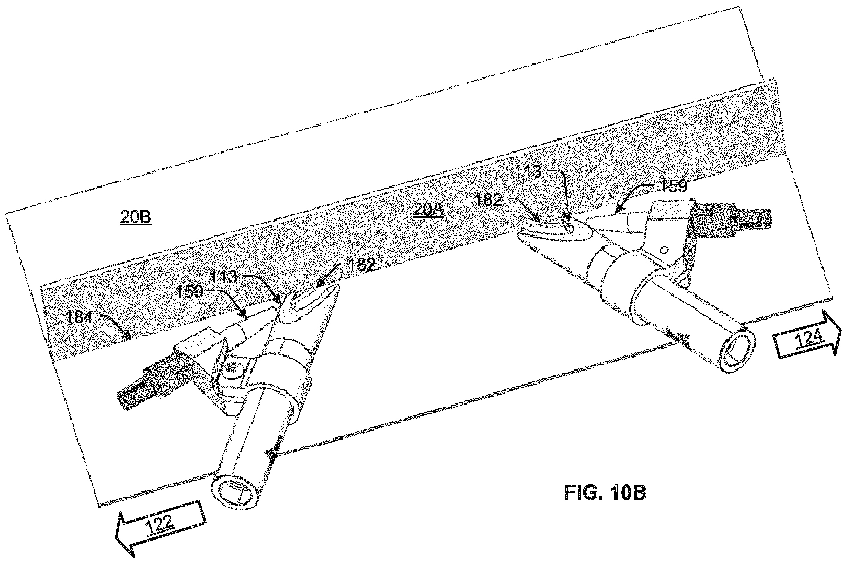

FIGS. 10A and 10B illustrate perspective views of an example laser welding system employing another modified, angled nozzle 159, specifically containing a channel 113 to receive, guide or otherwise allow a welding wire 136 to be directed through the nozzle 159.

The illustrated angled nozzle 159 is arranged at an end of a neck 161 of the torch (e.g., handheld laser welding torch 12). Attached to the neck 161 is a collar mount or bracket 172 to receive a tube or connection 170, configured to direct the wire 136 toward a joint 184 between two workpieces 20A and 20B arranged at a T-joint (as shown in FIG. 10B).The wire 136 is funneled through the tube 170 and into a tip 174, such that the wire 36 is directed to and through the channel 113 to a welding point 82, where a laser 142 and the wire 136 meet at the joint 184 to create a weld bead.

In some examples, the channel 113 can be entirely encircled by material of the nozzle 159. The channel or hole can be formed during forging of the nozzle and/or drilled or bored after forming the nozzle. The channel can be sized slightly larger than the wire being used to allow for some movement and/or vibration of the wire during a welding operation. In some examples, the channel has a consistent inner diameter, while in other examples the channel has a tapered profile (e.g., broader at the entrance of the wire). In some examples, the channel is substantially straight, where in some examples the channel may be angled at one or more points along a length of the channel. The channel can have a substantially circular cross-section, but can have any geometric shape desired. As shown in FIG. 10A, the tip 174 is aligned with the channel 113, while maintaining a gap between a surface of the nozzle and the tip.

As shown in FIG. 10A, the laser 142 is aligned with the neck 161 along a first axis 180, and is oriented to cross a second axis 181, coaxially aligned with the path of the wire 136. The first axis 180 of the laser beam 142, the nozzle 159 and the second axis 181 of wire 136 are co-planar with a plane that is parallel to the horizontal and about the center of the laser welding nozzle 159. In other words, all the points of the axes lie on the same plane, facilitating welding operations.

The collar mount 172 is secured to the neck 161 via one or more fasteners or collar screws 176, to create tension around the external circumference of the neck 161. An extension 171 can receive the tip 174 to align the tube, tip, and/or wire with a second axis 181. For example, one or more devices and/or techniques may be employed to ensure alignment of the wire 136. This can include visual devices (e.g., notches, linear indicators, etc.), and/or physical devices (e.g., detents, geometric channels and/or tips, threaded holes/tips, etc.) to provide for consistent alignment, such as during replacement of consumables, such as the nozzle 159.

As disclosed herein, one or more contact edges 120 of the angled nozzle 159 are designed to contact one or more surfaces of the workpiece. For instance, a first contact edge may contact workpiece 20A, and a second contact edge may contact workpiece 20B, thereby creating stability for the welder during a handheld welding operation.

The weld bead is laid in the joint 184 between the workpiece 20A and the workpiece 20B. The wire 136 is channeled through the opening in the nozzle 159 between contact edges 120, thereby allowing for the contact edges 120 to be in contact with one or both of the workpieces 20A and 20B, as the torch is moved along the workpieces during a welding operation.

The design illustrated in FIGS. 10A and 10B allows for geometric features of the nozzle to be mirrored symmetrically about a centrally placed plane. As a result, the welder can rotate the handheld laser welding torch by 180 degrees to weld in the opposite direction along the T-joint. This allows more end user flexibility laser welding T-joints.

In the example of FIG. 10B, the angle of the nozzle on the left hand side (such that the torch is moved toward the left, indicated by arrow 122) allows the welder to maintain contact between edges 120 and the workpieces 20A, 20B and/or the joint 184, during a welding operation. Similarly, the angle of the nozzle on the right hand side allows the welder to maintain contact between edges 120 and the workpieces 20A, 20B and/or the joint 184, during a welding operation moving the torch to the right, as indicated by arrow 124. Thus, the disclosed concept uses geometric symmetry of the nozzle 159 to achieve dual-direction welding, such as at a T-joint illustrated in FIG. 10B.

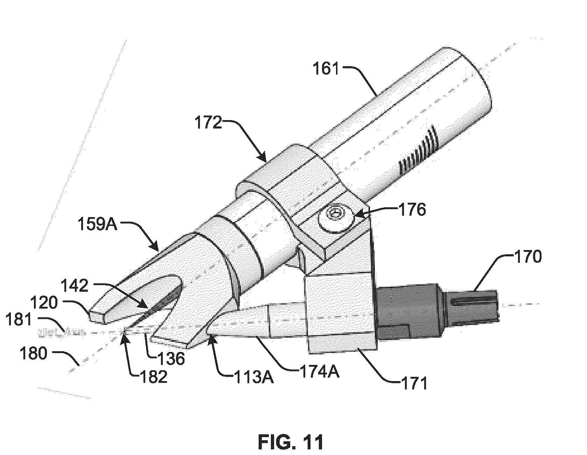

FIGS. 11 to 13 illustrate several views of an example laser welding system employing another angled nozzle 159A. The disclosed nozzle 159A is similar to nozzle 159 of FIGS. 10A and 10B, such that similar or identical reference numerals are used to refer to similar or identical components.

As shown in FIG. 11, the angled nozzle 159 is arranged at an end of a neck 161 of a handheld laser welding torch, attached to the neck 161 via collar mount 172 to receive the tube 170. The holder 171 supports the tube 170 as well as a tip 174A. For instance, the holder 171 joins, couples, supports and/or aligns the tube and tip, such that the wire 136 is directed toward the joint 184.

In the illustrated example, the channel 113A can be entirely encircled by material of the nozzle 159A, while being dimensioned to receive and/or support the tip 174A. Similar to the channel 131 of FIGS. 10A and 10B, the channel 113A can have a variety of geometric shapes, sizes, and/or angles, to support a particular application.

The components of the torch, neck and nozzle can be removed, replaced, and/or assembled to ensure the tip is properly aligned with the nozzle. For instance, collar screw 176 can be untightened to allow the collar mount 172 to float unconstrainted along nozzle mounting tube 161 while the tip 174A is fitted together with channel 113A of the nozzle 159A. After properly arranged, the collar screw 176 is tightened, maintaining the arrangement of the components.

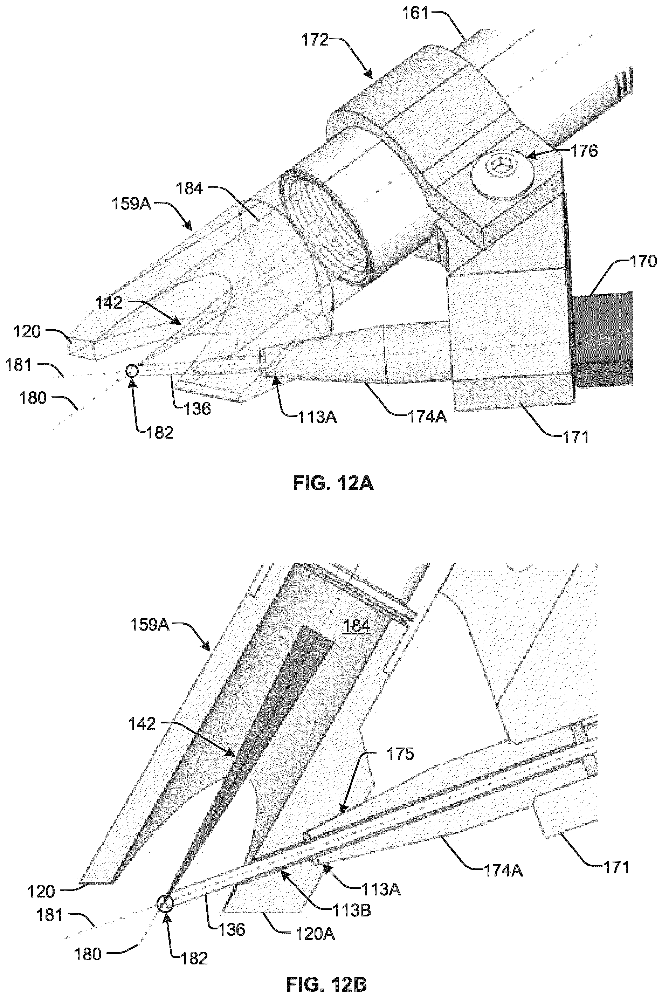

In contrast to the tip 174 and channel 113 of FIG. 10A, the channel 113A is configured for a portion 175 of the tip 174A to be inserted into the channel 113A. FIGS. 12A and 12B provide a transparent illustration of the nozzle 159A, showing the portion 175 extending into the channel 113A. The contact edge 120A is dimensioned (e.g., is larger than contact edge 120) such that the portion 175 is nested within channel 113A. As channel 113A narrow, a secondary channel 113B continues through the remainder of contact edge 120A, such that the secondary channel 113B guides the wire 136 into the cavity 184 of the nozzle 159A. The tip 174A, the portion 175, the channel 113A, and secondary channel 113B are all aligned with the secondary axis 181, such that the wire continues on the axis 181 to meet the laser beam 142 at point 182.

The portion 175 and channel 113A represent a male-female fit of conical surfaces, allowing self-alignment for a coaxial fit. Thus, to accommodate the portion 175 of tip 174A, the channel 113A has a conical, tapered profile, as shown in FIG. 12B. However, other shapes, sizes, and arrangements are considered.

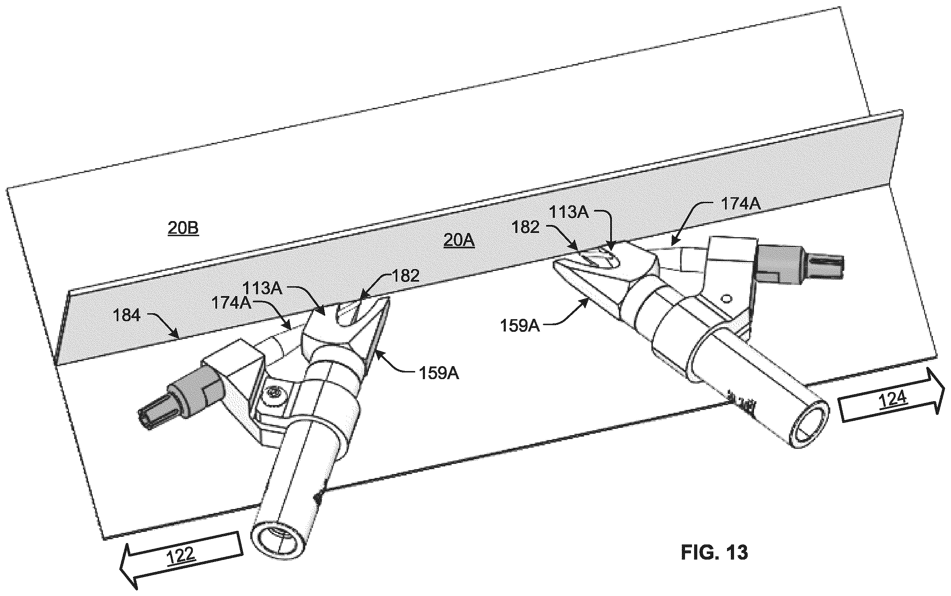

FIG. 13 illustrates a perspective view of an example laser welding system employing another angled nozzle, in accordance with aspects of this disclosure. The design illustrated in FIG. 13 allows for geometric features of the nozzle to be mirrored symmetrically about a centrally placed plane. As a result, the welder can rotate the handheld laser welding torch by 180 degrees to weld in the opposite direction along the T-joint. This allows more end user flexibility laser welding T-joints.

In the example of FIG. 13, similar to FIG. 10B, the angle of the nozzle 159A on the left hand side (such that the torch is moved toward the left, indicated by arrow 122) allows the welder to maintain contact between edges 120, 120A and the workpieces 20A, 20B and/or the joint 184, during a welding operation. Similarly, the angle of the nozzle on the right hand side allows the welder to maintain contact between edges 120 and the workpieces 20A, 20B and/or the joint 184, during a welding operation moving the torch to the right, as indicated by arrow 124. Thus, the disclosed concept uses geometric symmetry of the nozzle 159 to achieve dual-direction welding, such as at a T-joint illustrated in FIG. 13.

As utilized herein the terms "circuits" and "circuitry" refer to physical electronic components (i.e., hardware) and any software and/or firmware ("code") which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code. As utilized herein, "and/or" means any one or more of the items in the list joined by "and/or." As an example, "x and/or y" means any element of the three-element set {(x), (y), (x, y)}. In other words, "x and/or y" means "one or both of x and y." As another example, "x, y, and/or z" means any element of the seven-element set {(x), (y), (z), (x, y), (x, z), (y, z), (x, y, z)}. In other words, "x, y and/or z" means "one or more of x, y and z." As utilized herein, the term "exemplary" means serving as a non-limiting example, instance, or illustration. As utilized herein, the terms "e.g.," and "for example" set off lists of one or more non-limiting examples, instances, or illustrations.

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. For example, systems, blocks, and/or other components of disclosed examples may be combined, divided, re-arranged, and/or otherwise modified. Therefore, the present method and/or system are not limited to the particular implementations disclosed. Instead, the present method and/or system will include all implementations falling within the scope of the appended claims, both literally and under the doctrine of equivalents.

## Claims

1. A nozzle for a handheld laser welding torch comprising:
one or more portions of the nozzle extending from the nozzle opposite the handheld laser welding torch; and
a channel extending through a first portion of the one or more portions, the channel extending from an external surface of the nozzle to a central cavity of the nozzle.

2. The handheld laser welding torch of claim 1, further comprising a mount for a wire tip, wherein the wire tip is aligned with a wire axis extending through the channel.

3. The handheld laser welding torch of claim 2, wherein the central cavity of the nozzle is aligned with a central axis.

4. The handheld laser welding torch of claim 3, wherein a laser beam is directed along the central axis through the central cavity of the nozzle.

5. The handheld laser welding torch of claim 3, wherein the wire axis and the central axis are arranged to intersect at a point corresponding to a weld.

6. A nozzle for a handheld laser welding torch comprising:
first and second portions of the nozzle extending from the nozzle opposite the handheld laser welding torch; and
a channel extending through the first portion, the channel configured to receive a wire tip at an external surface of the nozzle.

7. The handheld laser welding torch of claim 6, further comprising a mount to secure the wire tip, wherein the wire tip is aligned with a wire axis extending through the channel.

8. The handheld laser welding torch of claim 7, wherein the channel is configured to extend from the external surface through the first portion to the central cavity, the channel being defined by a first diameter at the external surface and a second diameter at the central cavity.

9. The handheld laser welding torch of claim 8, wherein the first diameter is greater than the second diameter.

10. The handheld laser welding torch of claim 7, wherein the channel is tapered, such that the channel slopes from the first diameter to the second diameter within the first portion.

11. The handheld laser welding torch of claim 6, wherein the first portion of the nozzle is greater than the second portion.

12. The handheld laser welding torch of claim 7, wherein the central cavity of the nozzle is aligned with a central axis.

13. The handheld laser welding torch of claim 12, wherein a laser beam is directed along the central axis through the central cavity of the nozzle.
